# EUROPÄISCHE PATENTSCHRIFT

(11) **EP 0 517 302 B1**
(45) Veröffentlichungstag und Bekanntmachung des Hinweises auf die Patenterteilung: **07.02.1996**
(21) Anmeldenummer: 92201516.9
(22) Anmeldetag: 29.05.1992
(51) Int. Cl.: G03B 42/02

(54) **Anordnung zum Erzeugen von Röntgenaufnahmen**
Arrangement for producing X-ray photographs
Installation de production de radiographies

(30) Priorität: 03.06.1991 DE 4118153
(43) Veröffentlichungstag der Anmeldung: 09.12.1992
(73) Patentinhaber: Philips Patentverwaltung GmbH, D-22335 Hamburg (DE); Philips Electronics N.V., NL-5621 BA Eindhoven (NL)
(72) Erfinder: Maack, Hanns-Ingo, W-2000 Hamburg 1 (DE); Neitzel, Ulrich, Dr., W-2000 Hamburg 1 (DE); Schäfer, Ingo, Dr., W-2000 Hamburg 1 (DE)
(74) Vertreter: Hartmann, Heinrich, Dipl.-Ing.

(56) Entgegenhaltungen:
- EP-A- 0 032 237
- EP-A- 0 094 843
- EP-A- 0 379 748
- EP-A- 0 456 322
- DE-A- 2 952 422
- DE-A- 3 534 768
- DE-A- 4 015 113

## Beschreibung

Die Erfindung betrifft eine Anordnung zum Erzeugen von Röntgenaufnahmen mit einem Röntgenstrahler zum Erzeugen eines Röntgenstrahlenbündels, einer auf einer zylinderförmigen Trommel befindlichen, für Röntgenstrahlung empfindlichen Schicht und einer Ausleseeinheit zum Umsetzen des in der Schicht detektierten Röntgenbildes in elektrische Bildwerte. Dabei geht es um eine Anordnung, bei der alle Partien der Röntgenaufnahme gleichzeitig belichtet werden - im Gegensatz zu der Anordnung nach der DE-OS 35 34 768, wo die Partien nacheinander belichtet werden.

Eine derartige Anordnung ist aus der EP-OS 94 843 (Fig. 8) bekannt. Die Beseitigung der geometrischen Verzerrungen, die durch die Krümmung der Trommeloberfläche entstehen, werden in der genannten Veröffentlichung nicht behandelt.

Aus der nicht vorveröffentlichten Patentanmeldung EP-A-0 456 322, hier zitiert gemäß Art. 54(3)EPÜ, ist darüberhinaus eine Anordnung der eingangs genannten Art bekannt, bei der zur Beseitigung der geometrischen Verzerrungen Mittel zur Transformation des Röntgenbildes auf der Schicht in eine auf einer virtuellen Ebene befindlichen Röntgenaufnahme vorgesehen sind. Diese Mittel rechnen das auf die gekrümmte Trommel projizierte Röntgenbild in eine ebene Röntgenaufnahme um.

Aufgabe der vorliegenden Erfindung ist es, die Eigenschaften einer derart erzeugten Röntgenaufnahme noch weiter zu verbessern.

Ausgehend von einer Anordnung der eingangs genannten Art wird diese Aufgabe dadurch gelöst, daß Mittel zur Transformation des auf der Schicht befindlichen Röntgenbildes in eine auf einer virtuellen Ebene befindliche Röntgenaufnahme vorgesehen sind und daß Filtermittel vorgesehen sind, die die Modulationsübertragungsfunktion in der Mitte der Röntgenaufnahme anheben.

Bei Untersuchungen, die zu der Erfindung geführt haben, hat sich herausgestellt, daß das Auflösungsvermögen einer durch eine derartige Transformation erzeugten Röntgenaufnahme zu den zur Achse der Trommel parallelen Seiten hin zunimmt. Diese den Betrachter störende örtliche Inhomogenität der Auflösung wird durch die erfindungsgemäßen Maßnahmen beseitigt. Die Filtermittel heben die Modulationsübertragungsfunktion in der Mitte der Röntgenaufnahme an, so daß sich in der Röntgenaufnahme ein zumindest annähernd gleichmäßiges Auflösungsvermögen ergibt.

Um das Auflösungsvermögen zu vergleichmäßigen, müssen die Filtermittel die Modulationsübertragungsfunktion in der Mitte der durch die Transformation entstehenden Röntgenaufnahme stärker beeinflussen als zu den Seiten hin. Man könnte die Vergleichmäßigung des Auflösungsvermögens deshalb dadurch erreichen, daß man die durch die Transformation erzeugte Röntgenaufnahme einem Filterprozeß unterzieht, der eine ortsabhängige Übertragungsfunktion hat. Filtermittel mit einer derartigen Übertragungsfunktion sind aber recht aufwendig. Eine bevorzugte Weiterbildung sieht demgegenüber vor, daß die Mittel zur Beeinflussung der Modulationsübertragungsfunktion ein Filter zur Kantenanhebung umfassen, das den Transformationsmitteln vorgeschaltet ist. Dieses Filter kann ortsunabhängige Parameter haben. Es hat sich nämlich gezeigt, daß, wenn die Bildwerte - wie allgemein üblich - äquidistanten Bildpunkten auf der Trommeloberfläche zugeordnet sind, ein ortsunabhängiges Kantenanhebungsverfahren in dem aus diesen Bildwerten zusammengesetzten Röntgenbild nach der anschließenden Transformation in eine virtuelle Ebene zu einer Röntgenaufnahme mit gleichmäßigem Auflösungsvermögen führt. Die Kantenanhebung kann dabei beispielsweise mittels eines sogenannten unsharp-masking-Verfahrens erfolgen.

Bei dem unsharp-masking-Verfahren wird zunächst ein Tiefpaßbild erzeugt. Dieses Tiefpaßbild wird von dem Originalbild subtrahiert und das auf diese Weise erzeugte Hochpaßbild wird mit einem geeigneten Anhebungsfaktor multipliziert zum Originalbild addiert. In dem durch die Addition erzeugten Bild sind die Kanten - im Vergleich zu dem Originalbild - stärker betont. Die Erzeugung des Tiefpaßbildes ist ein zweidimensionaler Prozeß, d.h. zur Bildung eines Tiefpaßbildwertes für einen Bildpunkt müssen die Bildwerte der in einem quadratischen Fenster liegenden Bildpunkte herangezogen werden.

Eine bevorzugte Weiterbildung sieht demgegenüber vor, daß bei der Kantenanhebung nur solche Bildwerte miteinander kombiniert werden, die von Bildpunkten herrühren, die auf der Schicht in einer zur Symmetrieachse der Trommel senkrechten Ebene liegen. Hier werden also nur die Bildwerte herangezogen, die Bildpunkten zugeordnet sind, die auf der Trommeloberfläche durch einen Kreisbogen um die Achse miteinander verbunden sind. Das vereinfacht die Berechnung der Tiefpaßbildwerte erheblich. Dabei wird die Tatsache ausgenutzt, daß sich das Auflösungsvermögen in Richtung parallel zur Symmetrieachse der Trommel praktisch nicht ändert.

Die Erfindung wird nachstehend anhand der Zeichnung näher erläutert. Es zeigen
- Fig. 1: ein erfindungsgemäßes Röntgengerät in schematischer Darstellung,
- Fig. 2: die Verzerrungen eines Gitters auf der Trommel,
- Fig. 3: die Modulationsübertragungsfunktion ohne die erfindungsgemäßen Maßnahmen,
- Fig. 4: eine Einheit zur Verarbeitung der von der Ausleseeinheit gelieferten Bildwerte,
- Fig. 5: ein Flußdiagramm, das die Verarbeitung der Bildwerte erläutert,
- Fig. 6: ein Flußdiagramm, das die Veränderung der Modulationsübertragungsfunktion erläutert und
- Fig. 7: die Modulationsübertragungsfunktion nach Anwendung der erfindungsgemäßen Maßnahmen.

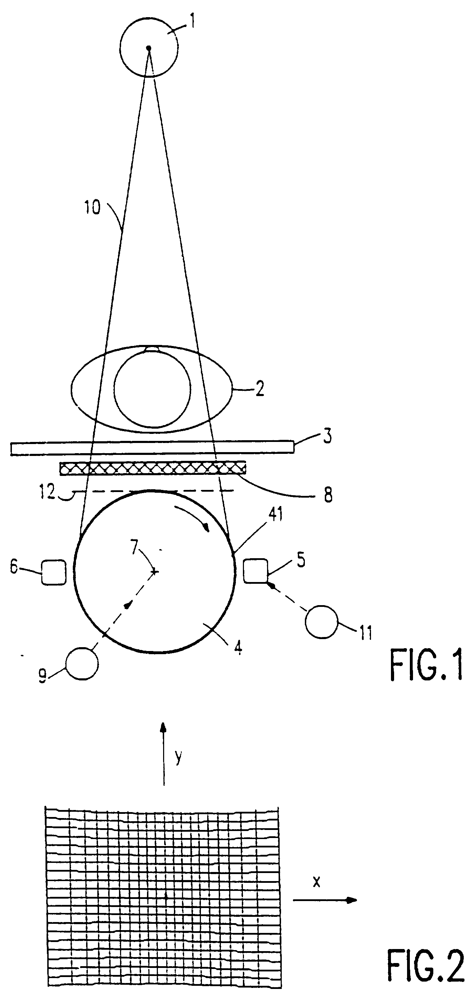

Gemäß Fig. 1 durchsetzt das von dem Fokus eines Röntgenstrahlers 1 ausgehende Röntgenstrahlenbündel 10 einen auf einer Tischplatte 3 liegenden Patienten 2 sowie ein Streustrahlenraster 8, bevor es auf eine Trommel 4 trifft. Die Trommel 4 wird durch einen zylinderförmigen Körper mit kreisförmigem Querschnitt gebildet, dessen zur Zeichenebene der Fig. 1 senkrechte Zylinderachse 7 gleichzeitig seine Drehachse ist. Die Trommel 4 kann mittels eines Motorantriebs 9 um die Drehachse 7 angetrieben werden. Auf ihrer Mantelfläche ist die Trommel 4 mit einem Photoleiter beschichtet, vorzugsweise einer 0,5 mm starken Selenschicht 41.

Außerhalb des Strahlenganges befindet sich eine Aufladeeinrichtung 6, die vor einer Röntgenaufnahme die rotierende Trommel auflädt, so daß zwischen der Oberfläche der elektrisch leitenden Trommel und der Außenfläche der Selenschicht eine Spannung von z.B. 1.500 V entsteht. Ebenfalls außerhalb des Strahlenganges befindet sich eine Ausleseeinrichtung 5, die nach einer Röntgenaufnahme mit einer oder mehreren Sonden die Ladungsdichte auf einer bzw. mehreren Spuren der rotierenden Trommel ausliest. Zwecks Auslesung der gesamten Mantelfläche der Trommel wird die Ausleseeinheit mittels einer weiteren Antriebseinheit 11 parallel zur Drehachse 7 verschoben mit einer mittleren Geschwindigkeit, die klein ist im Vergleich zu der Umfangsgeschwindigkeit des Trägers.

Bei einer Röntgenaufnahme ist der Antrieb 9 für die Trommel 4 abgeschaltet, und daher werden alle Punkte auf der Trommeloberfläche, die für die betreffende Röntgenaufnahme zur Bildgebung beitragen, durch das Strahlenbündel 10 gleichzeitig belichtet. Bei der Projektion des Röntgenstrahlungsmusters auf die gekrümmte Trommeloberfläche entstehen Verzerrungen, die dadurch beseitigt werden können, daß das Röntgenbild auf der Trommeloberfläche in eine Röntgenaufnahme auf einer virtuellen Ebene 12 transformiert wird. Diese virtuelle Ebene ist vorzugsweise mit der Scheitelebene der Trommeloberfläche identisch, die senkrecht zu der die Drehachse 7 und den Fokus des Röntgenstrahlers 1 enthaltenden Ebene steht.

Fig. 2 zeigt die Verzerrungen, die entstehen, wenn ein Gitter mit quadratischen Maschen, das sich in der Ebene 12 befindet, auf die Trommel projiziert wird. Bezeichnet man die zur Drehachse 7 der Trommel parallele Richtung mit y und die dazu senkrechte Richtung auf der Trommel (d.h. die Umfangsrichtung) mit x, dann gilt für die Projektion des Gitters auf die Trommeloberfläche folgendes: Die Abstände der in y-Richtung verlaufenden Gitterlinien voneinander nehmen nach beiden Seiten hin stark zu, jedoch bleiben diese Gitterlinien Geraden. Die entsprechenden Abstände der in x-Richtung verlaufenden Gitterlinien hingegen nehmen im Zentrum nicht und an den Bildecken leicht zu, so daß diese Gitterlinien auf der Trommel eine leichte Krümmung aufweisen.

Durch die Transformation des Röntgenbildes des Gitters in die virtuelle Ebene ergibt sich eine Röntgenaufnahme, deren Gitterlinien in x- und y-Richtung überall den gleichen Abstand voneinander haben. Wie diese Transformation im einzelnen erfolgt, ist in der älteren Anmeldung, EP-A-0 456 322 beschrieben.

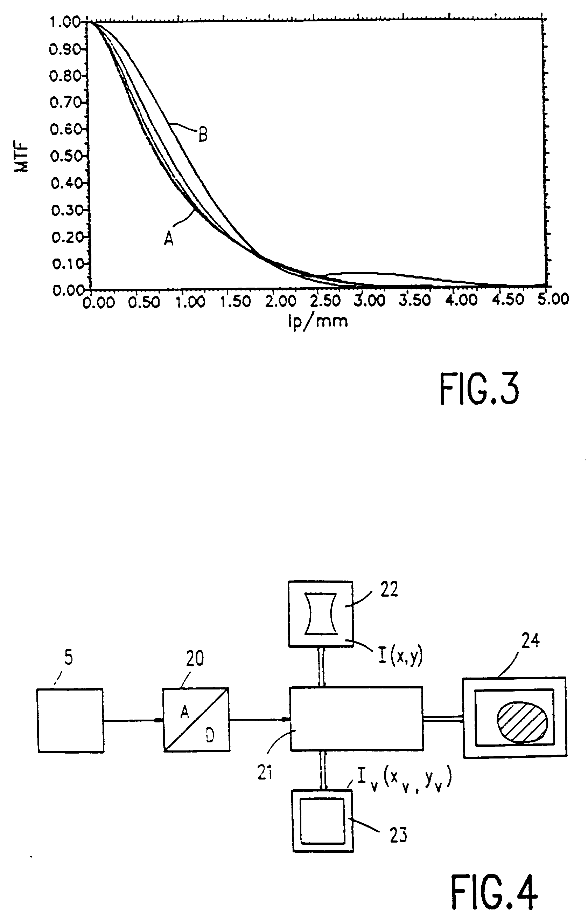

Die durch die Transformation erzeugte Röntgenaufnahme zeigt jedoch ein örtlich inhomogenes Auflösungsvermögen, wie anhand von Fig. 3 erläutert wird, die die Modulationsübertragungsfunktion MTF in x-Richtung als Funktion der Ortsfrequenz - ausgedrückt in lp/mm (Linienpaare pro mm) - für verschiedene Bereiche der Röntgenaufnahme dargestellt. Die Kurve A zeigt den Verlauf im Zentrum des Bildes, während die Kurve B den Verlauf der Modulationsübertragungsfunktion im Bereich des Randes darstellt. Dabei wurde von einem Trommeldurchmesser von 500 mm, einem Abstand der Ebene 12 vom Fokus des Strahlers 1 von 1800 mm und einem gegenseitigen Abstand der Bildpunkte auf der Trommel von 0,2 mm ausgegangen. Die Größe der Röntgenaufnahme (d.h. die Fläche in der Ebene 12, die vom Strahlenbündel 10 durchsetzt wurde, betrug 430 mm x 430 mm, woraus sich ergibt, daß die Trommel auf einem Umfangswinkel von fast 140° belichtet wurde.

Man erkennt deutlich, daß das Auflösungsvermögen bzw. die MTF in den Ecken wesentlich höher ist als im Zentrum.

Dieses örtlich variierende Auflösungsvermögen ist für den Betrachter ungewohnt und kann zu Fehlinterpretationen führen. Bei der Erfindung geht es daher darum, eine Röntgenaufnahme zu schaffen, deren Auflösungsvermögen überall gleichmäßig ist.

Im allgemeinen müßte man zum Ausgleich eines ortsabhängigen Auflösungsvermögens die Bildwerte einem Filterprozeß unterwerfen, dessen Parameter ebenfalls ortsabhängig variieren. Ein solcher Filterprozeß mit ortsabhängigen Parametern würde aber einen erheblichen Aufwand erfordern. Im folgenden wird daher eine Lösung erläutert, die erheblich einfacher ist, weil sie mit ortsunabhängigen Filterparametern arbeiten kann. Diese Lösung basiert auf der Erkenntnis, daß das ungleichmäßige Auflösungsvermögen der durch die Transformation erzeugten Röntgenaufnahme im wesentlichen auf zwei Effekte zurückgeht.
a) Der erste Effekt beruht auf der endlichen Dicke der Selenschicht und darauf, daß an den Bildrändern diese Schicht nicht senkrecht von den Röntgenstrahlen getroffen wird, sondern schräg. Bei einem schräg in den Photoleiter eintretenden Röntgenstrahl hängt der Ort, an dem sich die Ladung an der Oberfläche der Schicht verändert, davon ab, in welcher Tiefe des Photoleiters das betreffende Röntgenquant absorbiert wird.
   Dieser Effekt führt dazu, daß das Röntgenbild, d.h. das auf der Trommeloberfläche erzeugte Ladungsmuster, an den Rändern ein geringeres Auflösungsvermögen hat, als in der Mitte - im Gegensatz zu der durch die Transformation erzeugten Röntgenaufnahme, wo die Verhältnisse genau umgekehrt sind. Dieser Effekt ist von der Härte der Röntgenstrahlung, d.h. von der Größe der Hochspannung abhängig, die bei einer Röntgenaufnahme an den Röntgenstrahler 1 angelegt wird. Bei sehr geringen Röhrenspannungen ist dieser Effekt praktisch vernachlässigbar, weil nahezu die gesamte Röntgenstrahlung an der Oberfläche des Photoleiters absorbiert wird. Je höher die Röhrenspannung aber ist, desto stärker macht sich dieser Effekt bemerkbar.
b) Der zweite Effekt ist zum ersten gegenläufig. Er entsteht durch die Transformation des Röntgenbildes auf der Trommel in eine in der virtuellen Ebene 12 liegende Röntgenaufnahme. Wie beispielsweise aus Fig. 2 hervorgeht, wird ein im Untersuchungsobjekt 2 (oder in der virtuellen Ebene 12) befindliches Detail mit bestimmten Abmessungen an den Rändern des Röntgenbildes wesentlich größer abgebildet als im Zentrum. Da die Ausleseeinheit 5 die Oberfläche der Trommel aber auf äquidistanten Bildpunkten abtastet, bedeutet dies, daß dieses Detail durch wesentlich mehr Bildpunkte bzw. mehr Bildwerte definiert wird, wenn es am Rande liegt, statt in der Mitte. Dieser Effekt dominiert in der Regel den ersten Effekt, und er führt daher dazu, daß nach der Transformation das Auflösungsvermögen der Röntgenaufnahme an den Rändern höher ist als im Zentrum.

Zur Vergleichmäßigung des Auflösungsvermögens wird nun das auf der Trommel erzeugte Röntgenbild einem Kantenanhebungsverfahren unterzogen, und zwar bevor es in die virtuelle Ebene transformiert wird. Eine solche Kantenanhebung kann beispielsweise mittels des bekannten unharp-masking-Verfahrens (vergl. DE-PS 29 52 422) durchgeführt werden. Dies führt dazu, daß in dem Röntgenbild die Kanten bzw. die feinen Bilddetails in der Mitte, wo sie wegen des unter a) beschriebenen Effekts ohnehin schon ausgeprägt sind, noch weiter angehoben werden. Durch geeignete Wahl der Parameter dieses Kantenanhebungsverfahrens läßt sich aber erreichen, daß nach der Transformation, bei der wegen des unter b) geschilderten Effekts das Auflösungsvermögen an den Rändern angehoben wird, eine Röntgenaufnahme entsteht, die überall ein zumindestens näherungsweise gleichmäßiges Auflösungsvermögen aufweist. Dieses Verfahren und seine Wirkung soll im folgenden erläutert werden.

Gemäß Fig. 4 liefert die Ausleseeinheit 5 Signale, die der Aufladung der Trommeloberfläche entsprechen. Diese Signale werden mittels eines Analog-Digital-Wandlers 20 in eine Folge von digitalen Datenworten umgesetzt, die die Bildwerte des Röntgenbildes an äquidistanten Bildpunkten darstellen.

Die vom Analog-Digital-Wandler 20 gelieferten Bildwerte werden einer Verarbeitungseinheit 21 zugeführt, die mit einem ersten Bildspeicher 22 für das Röntgenbild I(x,y) auf der Trommel 4 und einem zweiten Bildspeicher 23 für die in die virtuelle Ebene 12 transformierte Röntgenaufnahme Iᵥ(xᵥ,yᵥ). Die mit einer ausreichenden Rechnerkapazität versehene Verarbeitungseinheit 21 macht das Auflösungsvermögen in der durch die Transformation erzeugten Röntgenaufnahme Iᵥ unabhängig vom Ort (xᵥ,yᵥ). Diese Röntgenaufnahme kann auf einer geeigneten Wiedergabeeinheit (z.B. einem Monitor 24) ausgegeben werden.

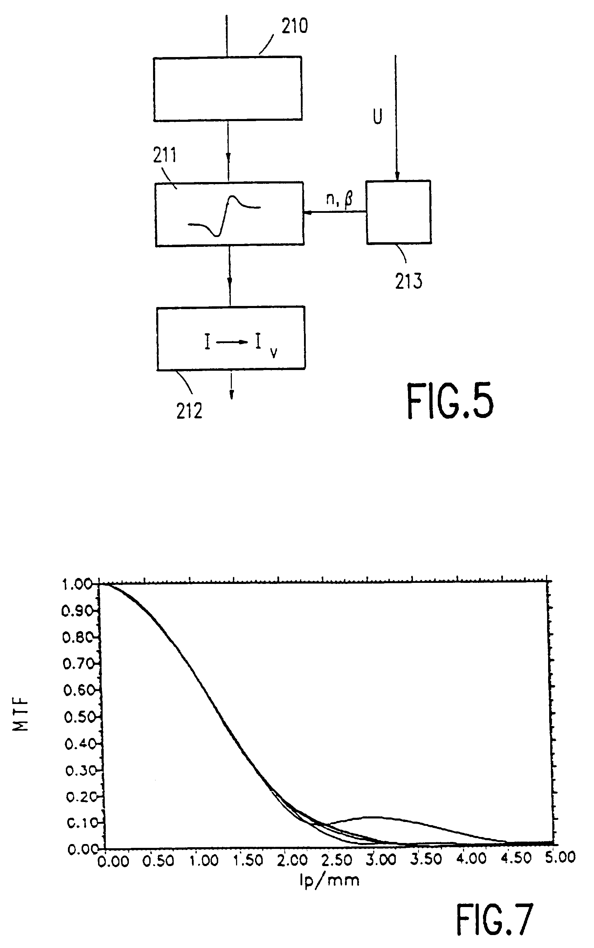

In Fig. 5 ist ein Flußdiagramm dargestellt, das die Verarbeitung der Bildwerte in der Einheit 21 beschreibt. Die vom Analog-Digital-Wandler 20 (Fig. 4) gelieferten Bildwerte werden in einem ersten Schritt (Block 210) zunächst kalibriert. Dadurch sollen Fehler beseitigt werden, die durch Drift- und Offseteffekte sowie durch die unterschiedliche Empfindlichkeit der Elektrometersonden hervorgerufen werden, mit denen die Ausleseeinheit 5 die Ladung auf der Oberfläche der Trommel 4 ausliest.

In einem zweiten Schritt werden die so kalibrierten Bildwerte des Röntgenbildes einem Kantenanhebungsverfahren unterzogen (Block 211). Die für diesen Filterprozeß erforderlichen Parameter n und β werden mittels eines Tabellenspeichers 213 in Abhängigkeit von der während der Röntgenaufnahme am Röntgenstrahler 1 wirksamen Hochspannung U vorgegeben.

Das auf diese Weise erzeugte Röntgenbild I wird anschließend in eine Röntgenaufnahme Iᵥ in der virtuellen Ebene 12 transformiert (Block 212). Dieser Verfahrensschritt ist in der älteren Anmeldung EP-A-0 456 322 beschrieben.

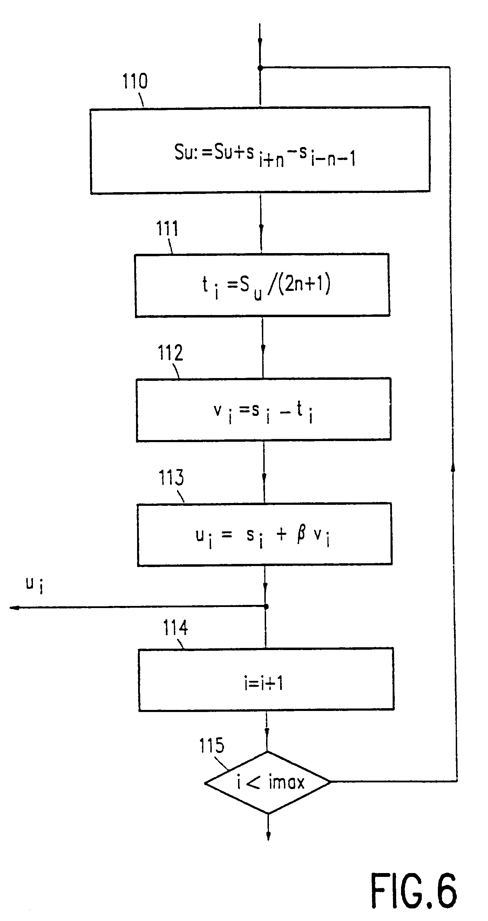

Fig. 6 zeigt ein Flußdiagramm des wesentlichen Teils des Kantenanhebungsverfahrens (Block 211). Bei einem Kantenanhebungsverfahren nach der unsharp-masking-Methode wird zunächst ein Tiefpaßbild erzeugt, aus dem durch Differenzbildung mit dem Originalbild ein Hochpaßbild entsteht. Das Hochpaßbild wird zu dem Originalbild addiert. In dem durch die Addition entstehenden Bild sind die kleinen Details bzw. die Kanten im Vergleich zum Originalbild angehoben. Die Erzeugung eines Tiefpaßbildwertes aus den Original-Bildwerten setzt an sich voraus, daß in einem quadratischen Fenster um den betreffenden Bildpunkt herum die Bildwerte gemittelt werden. Hierfür wäre an sich ein zweidimensionaler Datensatz erforderlich. Im folgenden wird aber nur ein eindimensionaler Datensatz herangezogen, und zwar wird über 2n+1 Bildpunkte gemittelt, die in x-Richtung aufeinanderfolgen. Dabei wird die Tatsache ausgenutzt, daß die für das ortsabhängige Auflösungsvermögen ursächlichen Effekte a und b im wesentlichen nur von der x-Koordinate eines Bildpunktes abhängen (vergl. Fig. 2), kaum aber von seiner y-Koordinate.

Dementsprechend wird im ersten Verarbeitungsschritt (Block 110) davon ausgegangen, daß ein Wert Su vorhanden ist, der der Summe der Bildwerte von 2n+1 Bildpunkten um einen mittleren Bildpunkt xᵢ-₁ herum entspricht. In dem ersten Verarbeitungsschritt wird zu diesem Summenwert Su der Bildwert sᵢ₊ₙ des Bildpunktes xᵢ₊ₙ hinzuaddiert und der Bildwert sᵢ₋ₙ₋₁ des Bildpunktes xᵢ₋ₙ₋₁ subtrahiert. Der so neugebildete Wert Su entspricht der Summe von 2n+1 in x-Richtung aufeinanderfolgenden Bildpunkten um den mittleren Bildpunkt xᵢ.

Im darauffolgenden Schritt (111) wird durch Division des so gebildeten Summenwertes Su durch den Faktor 2n+1 der arithmetische Mittelwert tᵢ gebildet. Dieser arithmetische Mittelwert entspricht einem Tiefpaßbildwert am Punkt xᵢ.

Im darauffolgenden Schritt (112) wird die Differenz zwischen dem Bildwert sᵢ und dem Tiefpaßbildwert tᵢ am Bildpunkt xᵢ gebildet. Der dadurch erzeugte Differenzwert vᵢ entspricht einem Hochpaßbildwert am Punkt xᵢ.

Im nächsten Schritt (Block 113) wird der so gebildete Hochpaßbildwert vᵢ mit einem Anhebungskoeffizienten β multipliziert, und das Produkt wird zu dem Originalbildwert sᵢ für den betreffenden Bildpunkt addiert.

Anschließend wird der Wert i um 1 erhöht (Block 114), und es wird die beschriebene Programmschleife (110..114) erneut durchlaufen (Block 115), bis der letzte Bildpunkt innerhalb einer Reihe von in x-Richtung aufeinanderfolgenden Bildpunkten erreicht ist. Danach wiederholt sich diese Prozedur für eine andere Reihe von Bildpunkten, bis alle Punkte des Röntgenbildes auf der Trommel verarbeitet sind.

Das aus den auf diese Weise erzeugten Bildwerten uᵢ erzeugte Röntgenbild zeigt gegenüber dem ursprünglichen Röntgenbild eine Anhebung des Kontrasts von kleinen Details bzw. von Kanten. Die Größe der Details, die durch dieses Verfahren hervorgehoben werden, wird durch den Filterparameter n bestimmt, während das Ausmaß dieser Hervorhebung von dem Anhebungskoeffizienten β abhängt. Die Parameter n und β lassen sich im allgemeinen so variieren, daß für jede Röhrenspannung, aber auch für unterschiedliche Aufnahmebedingungen (Abstand der Trommel vom Strahler, Größe des Bildes in der virtuellen Ebene) ein weitgehend ortsunabhängiges Auflösungsvermögen erzielt wird.

Fig. 7 zeigt die Modulationsübertragungsfunktion MTF als Funktion der Ortsfrequenz in der nach der anschließenden Transformation (Fig. 5, Block 212) erzeugten Röntgenaufnahme für dieselben Bereiche, wie Fig. 3. Man erkennt, daß in dem für die Diagnose wesentlichen Ortsfrequenzbereich unterhalb der Nyquist-Frequenz (2,5 lp/mm bei 0,2 mm großen Bildpunkten) ein örtlich nahezu vollständig gleichmäßiges Auflösungsvermögen erreicht worden ist. Die MTF ist in diesem Bereich darüberhinaus größer als bei den Kurven A und B der Fig. 3. Dem lag bei einer Röhrenspannung U von 125 kV ein Anhebungsfaktor β=0,8 und eine Größe des für die Tiefpaßfilterung herangezogenen eindimensionalen Kernels von 5 (d.h. n=2) zugrunde.

Bei anderen Bildparametern läßt sich ein zumindest annähernd homogenes Auflösungsvermögen durch eine andere Wahl der Filterparameter n und β erreichen. Im Einzelfall müssen diese Parameter empirisch ermittelt und in dem Tabellenspeicher 213 gespeichert werden.

Vorstehend wurde die Erfindung am Beispiel einer mit Selen beschichteten Trommel erläutert. Die Erfindung ist aber auch bei anderen Photoleitern anwendbar und auch dann, wenn anstelle eines Photoleiters eine auf andere Weise für Röntgenstrahlung empfindliche Schicht mit endlicher Dicke vorgesehen ist, beispielsweise eine Schicht aus einem Speicherphosphor, bei dem die darin erzeugte Fluoreszenzstrahlung von der Intensität der Röntgenstrahlung an dem betreffenden Bildpunkt abhängt. Denn das Problem (ortsabhängiges Auflösungsvermögen) und die Abhilfemöglichkeiten sind wegen der gleichen physikalischen Parameter (endliche Dicke der für Röntgenstrahlung empfindlichen Schicht, Trommelgeometrie) dieselben wie bei einer mit Selen beschichteten Trommel.

## Patentansprüche

1. Anordnung zum Erzeugen von Röntgenaufnahmen mit einem Röntgenstrahler (1) zum Erzeugen eines Röntgenstrahlenbündels (10), einer auf einer zylinderförmigen Trommel (4) befindlichen, für Röntgenstrahlung empfindlichen Schicht (41) und einer Ausleseeinheit (5) zum Umsetzen des in der Schicht detektierten Röntgenbildes in elektrische Bildwerte, wobei die Anordnung so gestaltet ist, daß bei einer Röntgenaufnahme alle Partien der empfindlichen Schicht gleichzeitig belichtet werden,
dadurch gekennzeichnet, daß Mittel (21,211) zur Transformation des auf der Schicht befindlichen Röntgenbildes (I) in eine auf einer virtuellen Ebene (12) befindliche Röntgenaufnahme (Iᵥ) vorgesehen sind und daß Filtermittel (21; 110-119) vorgesehen sind, die die Modulationsübertragungsfunktion (MTF) in der Mitte der Röntgenaufnahme anheben.

2. Anordnung nach Anspruch 1,
dadurch gekennzeichnet, daß die für Röntgenstrahlung empfindliche Schicht (41) einen Photoleiter umfaßt und daß die Ausleseeinheit (5) dem Ladungsmuster auf der Schicht entsprechende Bildwerte liefert.

3. Anordnung nach Anspruch 2, dadurch gekennzeichnet, daß der Photoleiter aus Selen besteht.

4. Anordnung nach einem der vorhergehenden Ansprüche,
dadurch gekennzeichnet, daß die Mittel zur Beeinflussung der Modulationsübertragungsfunktion ein Filter zur Kantenanhebung (110..115) umfassen, das den Transformationsmitteln (212) vorgeschaltet ist.

5. Anordnung nach Anspruch 4,
dadurch gekennzeichnet, daß der Filter zur Kantenanhebung
so gestaltet ist, daß nur solche Bildwerte miteinander kombiniert werden, die von Bildpunkten herrühren, die auf der Schicht (41) in einer zur Symmetrieachse (7) der Trommel senkrechten Ebene liegen.

6. Anordnung nach einem der vorhergehenden Ansprüche,
dadurch gekennzeichnet, daß Mittel zum Speichern von mehreren Sätzen von Filterparametern (n,β) vorgesehen sind, von denen jeweils einer automatisch in Abhängigkeit von der Hochspannung (U) am Röntgenstrahler auswählbar ist.

## Claims

1. An arrangement for producing X-ray images, which arrangement comprises an X-ray source (1) for the generation of an X-ray beam (10), a layer (41) sensitive to X-rays and situated on a cylindrical drum (4), and a read unit (5) for converting the X-ray image detected in the layer into electrical image values, the arrangement being constructed so that all parts of the sensitive layer are simultaneously exposed during an X-ray exposure, characterized in that there are provided means (21, 211) for transforming the X-ray image (I) situated on the layer into an X-ray image (Iᵥ) situated in a virtual plane (12), and there are provided filter means (21; 110-119) for enhancing the modulation transfer function (MTF) in the centre of the X-ray image.

2. An arrangement as claimed in Claim 1, characterized in that the layer (41) which is sensitive to X-rays comprises a photoconductor, and the read unit (5) supplies image values corresponding to the charge pattern on the layer.

3. An arrangement as claimed in Claim 2, characterized in that the photoconductor consists of selenium.

4. An arrangement as claimed in any one of the preceding Claims, characterized in that the means for influencing the modulation transfer function comprise a filter for edge enhancement (110...115), which filter precedes the transformation means (212).

5. An arrangement as claimed in Claim 4, characterized in that the filter for edge enhancement is constructed so that only those image values are combined with one another which originate from image points which are situated on the layer (41) in a plane perpendicular to the axis of symmetry (7) of the drum.

6. An arrangement as claimed in any one of the preceding Claims, characterized in that there are provided means for storing a plurality of sets of filter parameters (n, β) from which each time one parameter can be selected automatically in dependence upon the high voltage (U) applied to the X-ray source.

## Revendications

1. Installation de production de radiographies avec un générateur de rayons X (1) pour la production d'un faisceau de rayons X (10), une couche (41) sensible aux rayons X située sur un tambour cylindrique (4) et une unité de lecture (5) pour la conversion de l'image radio détectée dans la couche en valeurs d'image électriques, l'installation étant conçue de telle sorte que toutes les parties de la couche sensible soient exposées simultanément en cas de radiographie, caractérisée en ce que des moyens (21, 211) sont prévus pour la transformation de l'image radio (I) se trouvant sur la couche en une radiographie (Iᵥ) située dans un plan virtuel (12) ainsi que des moyens de filtrage (21; 110-119) qui accentuent la fonction de transmission de modulation (MTF) dans le centre de la radiographie.

2. Installation selon la revendication 1, caractérisée en ce que la couche (41) sensible aux rayons X comprend un photoconducteur et en ce que l'unité de lecture (5) délivre au modèle de charge les valeurs d'image correspondantes sur la couche.

3. Installation selon la revendication 2, caractérisée en ce que le photoconducteur se compose de sélénium.

4. Installation selon l'une des revendications précédentes, caractérisée en ce que les moyens pour influencer la fonction de transmission de modulation comprennent un filtre pour accentuer les bords (110... 115) qui est monté en amont des moyens de transformation (212).

5. Installation selon la revendication 4, caractérisée en ce que le filtre pour l'accentuation des bords est conçu de manière à combiner mutuellement les valeurs d'image qui proviennent des pixels situés sur la couche (41) dans un plan perpendiculaire à l'axe de symétrie (7) du tambour.

6. Installation selon l'une des revendications précédentes, caractérisée en ce que des moyens de sauvegarde de plusieurs jeux de paramètres de filtrage (n, β) sont prévus dont respectivement un peut être sélectionné en fonction de la haute tension (U) à hauteur du dispositif à rayons X.
